# FASCICULE DE BREVET EUROPEEN

(11) **EP 0 801 600 B1**
(45) Date de publication et mention de la délivrance du brevet: **26.08.1998**
(21) Numéro de dépôt: 95943253.5
(22) Date de dépôt: 21.12.1995
(51) Int. Cl.: B23K 11/25, B23K 11/31

(54) **DISPOSITIF DE SOUDAGE PAR RESISTANCE ASSERVI EN EFFORT**
KRAFTGESTEUERTE WIDERSTANDSCHWEISSVORRICHTUNG
FORCE-CONTROLLED RESISTANCE WELDING DEVICE

(30) Priorité: 30.12.1994 FR 9415923
(43) Date de publication de la demande: 22.10.1997
(73) Titulaire: RENAULT, 92109 Boulogne-Billancourt (FR)
(72) Inventeur: HABERT, Patrick, F-75016 Paris (FR)
(74) Mandataire: Fernandez, Francis
(86) Numéro de dépôt international: FR9501706
(87) Numéro de publication internationale: WO9620805

(56) Documents cités:
- EP-A- 0 352 154
- EP-A- 0 508 874
- FR-A- 2 585 976
- US-A- 5 225 647
- PATENT ABSTRACTS OF JAPAN vol. 10, no. 44 (M-455) [2101] , 21 Février 1986 & JP,A,60 196276 (KAWASAKI JUKOGYO K.K.), 4 Octobre 1985,

## Description

La présente invention a pour objet un dispositif de soudage par résistance asservi en effort, utilisé notamment dans la construction automobile pour l'assemblage des caisses des véhicules.

On connaît, en particulier par les documents FR-A-2.585.976 et FR-A-88/09915, des dispositifs de soudage par résistance du type à pince comportant deux bras porte-électrodes propres à se déplacer l'un par rapport à l'autre et à venir enserrer entre les électrodes les tôles à souder. L'un au moins des bras étant relié à des moyens d'entraînement, tel qu'un système vis-écrou actionné par un moteur électrique piloté par un ensemble microcalculateur destiné notamment à contrôler l'écartement des électrodes et l'effort exercé sur les tôles. Ces dispositifs de soudage par résistance présentent également des moyens d'alimentation en courant électrique des électrodes par l'intermédiaire notamment de transformateurs de soudage formant abaisseurs de tension pilotés à partir de coffrets de commande aptes à faire passer le courant à travers les électrodes suivant des cycles prédéterminés.

De tels dispositifs connus doivent, pour assurer la soudure correcte des tôles et maintenir cette qualité de soudage à un niveau constant au cours du temps, maîtriser parfaitement l'effort de serrage appliqué par les électrodes sur les tôles.

Cette régulation de l'effort de serrage des électrodes est classiquement opérée selon l'art antérieur précité suivant deux approches distinctes :
- soit, en boucle ouverte grâce à la commande électronique du moteur électrique qui permet de piloter l'intensité du courant d'alimentation du moteur et donc le couple de ce dernier, cette méthode supposant que l'effort de serrage est directement fonction du courant qui alimente le moteur, le rendement du système vis-écrou étant connu et supposé constant ;
- soit encore, en boucle fermée en utilisant un capteur d'effort qui peut être inclus dans la mécanique du dispositif de soudage, entre le moteur et la vis ou mieux encore au niveau de l'application de l'effort.

La méthode de régulation en boucle ouverte présente l'inconvénient d'être peu précise car elle ne permet pas de contrôler l'effort qu'exerce réellement les électrodes sur les tôles, quant à la méthode de régulation en boucle fermée elle présente l'inconvénient d'être chère à mettre en oeuvre en nécessitant un capteur rapporté et sa connectique, qui peuvent par ailleurs se révéler une source de défaillance du dispositif de soudage par résistance.

Le but de la présente invention est donc de remédier à ces inconvénients en proposant un dispositif de soudage par résistance permettant une régulation de l'effort qui soit toute à la fois extrêmement précise et simple à mettre en oeuvre.

Le dispositif de soudage par résistance selon l'invention est du type comprenant deux électrodes de soudage propres à se déplacer l'une par rapport à l'autre et à enserrer entre elles les tôles à souder, l'une au moins de ces électrodes étant à cet effet reliée à des moyens d'entraînement formés par un mécanisme vis-écrou actionné par un moteur électrique, ces moyens d'entraînement étant connectés à des moyens électroniques de commande propres à contrôler la force avec laquelle les électrodes enserrent les tôles à souder en pilotant le courant d'alimentation du moteur électrique, le mécanisme vis-écrou transmettant la force du moteur aux électrodes étant réversible et de rendement élevé.

Selon l'invention, le dispositif de soudage par résistance est caractérisé en ce que les moyens électroniques de commande contrôlent l'effort de serrage des électrodes par un asservissement en boucle fermée au travers de l'image du courant d'alimentation parcourant le moteur électrique.

Selon une autre caractéristique du dispositif de soudage par résistance objet de l'invention, l'angle d'hélice du filetage de la vis du mécanisme vis-écrou est supérieur à six degrés.

Selon une autre caractéristique du dispositif de soudage par résistance objet de l'invention, l'angle d'hélice du filetage de la vis du mécanisme vis-écrou est compris entre six et dix degrés.

Selon une autre caractéristique du dispositif de soudage par résistance objet de l'invention, le microcalculateur constituant les moyens électroniques de commande pilote le courant d'alimentation du moteur électrique par l'intermédiaire d'un générateur de courant qui lui retransmet par une liaison spécifique l'image du courant alimentant le moteur électrique.

On comprendra mieux les buts, aspects et avantages de la présente invention, d'après la description présentée ci-après d'un mode de réalisation de l'invention, donné à titre d'exemple non limitatif, en se référant aux dessins annexés, dans lesquels :
la figure 1 est une vue générale schématique d'un dispositif de soudage par résistance selon l'invention ;
la figure 2 est une vue en coupe partielle du système d'entraînement des électrodes du dispositif de soudage par résistance selon la ligne II-II de la figure 1.

Seuls les éléments nécessaires à la compréhension de l'invention ont été représentés. Pour faciliter la lecture des dessins, on utilise les mêmes références pour désigner les mêmes pièces d'une figure à l'autre.

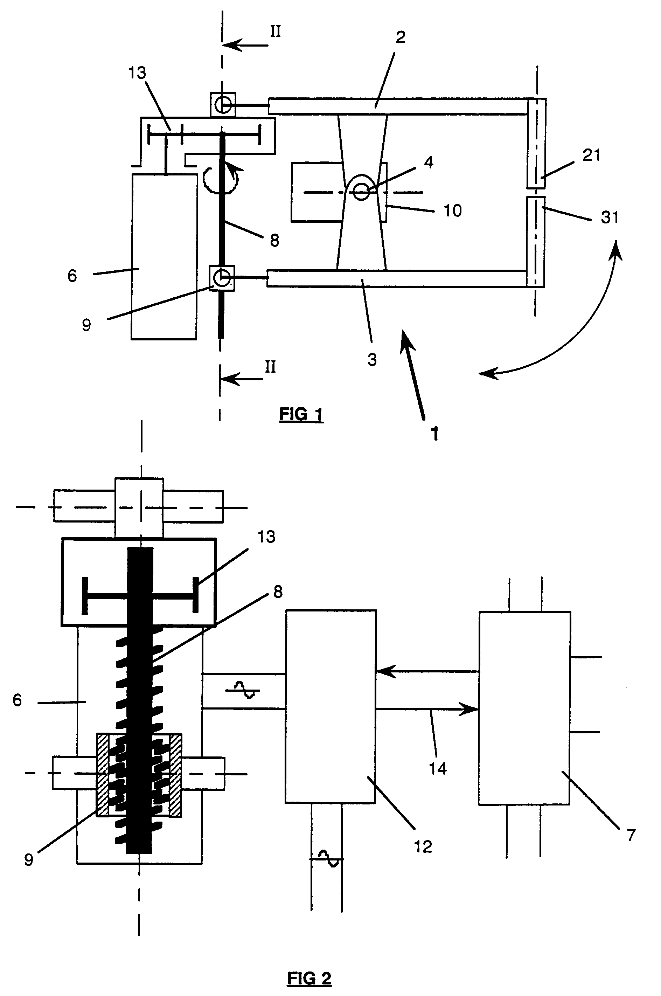

Sur la figure 1, on a représenté un dispositif de soudage par résistance, référencé 1, tel qu'utilisé notamment dans la construction automobile. Ce dispositif est classiquement constitué d'un bâti 10 portant une tête de soudage à commande numérique constituée par une pince dite en X destinée à réaliser un point de soudure. Cette pince est formée de deux bras 2 et 3, terminés chacun par une électrode de soudage, respectivement 21 et 31. Ces électrodes 21, 31 sont propres à se déplacer l'une par rapport à l'autre et à enserrer entre elles des tôles à souder non figurées, pour ce faire un bras 2 est monté fixe solidaire du bâti 10 et un bras 3 est monté mobile en rotation autour d'une articulation 4.

Le bras mobile 3 est entraîné en rotation par l'intermédiaire d'un écrou 9 articulé sur l'extrémité libre opposée à l'électrode 31. Cet écrou 9 est déplacé axialement par l'intermédiaire d'un système d'entraînement à vis actionné par un moteur électrique 6 commandé par un microcalculateur programmable destiné en particulier à piloter les déplacements du bras mobile 3 et à ajuster les efforts de serrage appliqués par les électrodes 21, 31 sur les tôles à souder.

L'alimentation électrique des électrodes est réalisée de façon connue en elle-même par l'intermédiaire d'un coffret de commande non figuré qui pilote la séquence de soudage en synchronisme avec le serrage des tôles par les électrodes 21, 31 grâce à une liaison de communication entre le microcalculateur et le coffret de commande.

Le système d'entraînement du bras mobile 3 est précisé conformément à la figure 2, le moteur électrique 6 de type autosynchrone ou sans collecteur qui est monté de façon articulée sur le bras fixe, entraîne en rotation directement ou comme figuré par l'intermédiaire d'un système d'entraînement par roues dentées 13, une vis à rouleaux 8 engagée dans l'écrou correspondant 9 solidaire du bras mobile. Ainsi, la rotation de la vis 8 dans un sens ou dans l'autre entraîne le déplacement axial de l'écrou 9, ce qui provoque un mouvement de rotation correspondant du bras 3 autour de son articulation 4.

Le moteur électrique 6 est donc piloté dans les deux sens par un variateur de puissance formant générateur de courant 12 commandé par le microcalculateur 7. Le microcalculateur 7 commande et contrôle le déplacement du bras mobile 3 jusqu'au contact des tôles à souder par les deux électrodes 21, 31 puis il détermine l'effort à appliquer par ces électrodes sur les tôles avant que le coffret de commande n'opère l'alimentation électrique de celles-ci. Lorsque l'opération de soudage est terminée, le microcalculateur 7 écarte le bras 3 pour libérer les tôles et permettre la réalisation d'un nouveau point de soudure.

L'effort commandé par le microcalculateur 7 est défini à partir de valeurs préprogrammées contenues dans sa mémoire, cet effort pouvant être constant ou bien encore évolutif au cours du cycle de soudage choisi. Le microcalculateur 7 déduit donc de cette valeur mémorisée, la valeur de consigne du courant alimentant le moteur 6 et donc la commande correspondante du générateur de courant 12.

Le microcalculateur 7 compare ensuite la valeur de consigne du courant demandée à la valeur réelle traversant le moteur 6 qui lui est retransmise par une liaison spécifique 14 connectée au générateur de courant 12 et détermine une valeur d'erreur qui multipliée par un coefficient prédéfini, donne la commande de correction à appliquer au générateur de courant 12 pour alimenter en conséquence le moteur 6 et obtenir l'effort de serrage des électrodes souhaité.

Cette correction en boucle fermée de l'effort appliqué au point de soudure en cours d'élaboration, objet de l'invention, est basée sur la seule mesure du courant traversant le moteur électrique 6, ce qui permet donc d'opérer de façon extrêmement précise le contrôle de l'effort exerce aux électrodes et ce d'une façon particulièrement simple à mettre en oeuvre.

Il faut noter que pour permettre cet asservissement en boucle fermée de l'effort de serrage des électrodes de soudage, il est nécessaire d'avoir une relation constante, juste et répétable, entre la valeur du courant qui alimente le moteur 6 et l'effort réel appliqué entre les électrodes, de sorte que pour un courant donné correspond un effort donné et vice versa. Cette relation est assurée dès lors que le système d'entraînement vis-écrou présente un rendement élevé et soit mécaniquement réversible.

On satisfait à ces deux conditions en choisissant soigneusement l'angle d'hélice de la vis. La demanderesse a pu en effet montrer que le système devient mécaniquement réversible pour un angle d'hélice du filetage de la vis 8 supérieur à six degrés et que le rendement, qui est maximum pour un angle d'hélice d'environ sept degrés, décroît ensuite régulièrement. Il en résulte que l'angle d'hélice de la vis 8 est préférentiellement choisi comme étant compris entre six et dix degrés.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, le dispositif suivant la présente invention est indépendant de la forme de la pince définissant la tête de soudage qui peut donc être en X à mouvement rotatif, en ciseau, ou encore en J ou en C à mouvement rectiligne ou coulissant du ou des bras mobiles.

## Revendications

1. Dispositif de soudage par résistance, du type comprenant deux électrodes de soudage (21,31) propres à se déplacer l'une par rapport à l'autre et à enserrer entre elles les tôles à souder, l'une au moins (31) étant à cet effet reliée à des moyens d'entraînement formés par un mécanisme vis-écrou (8,9) actionné par un moteur électrique (6), ces moyens d'entraînement étant connectés à des moyens électroniques de commande (7) propres à contrôler la force avec laquelle les électrodes (21,31) enserrent lesdites tôles à souder en pilotant le courant d'alimentation dudit moteur électrique (6), ce dispositif comportant en outre des moyens d'alimentation des électrodes en courant, ledit mécanisme vis-écrou transmettant la force du moteur (6) aux électrodes (21,31) étant réversible et de rendement élevé, caractérisé en ce que lesdits moyens électroniques de commande (7) contrôlent l'effort de serrage des électrodes par un asservissement en boucle fermée au travers de l'image du courant d'alimentation parcourant le moteur électrique (6).

2. Dispositif de soudage par résistance selon la revendication 1, caractérisé en ce que l'angle d'hélice du filetage de la vis (8) est supérieur à six degrés.

3. Dispositif de soudage par résistance selon la revendication 2, caractérisé en ce que l'angle d'hélice du filetage de la vis (8) est compris entre six et dix degrés.

4. Dispositif de soudage par résistance selon l'une quelconque des revendications 1 à 3, caractérisé en ce que le microcalculateur (7) constituant lesdits moyens électronique de commande pilote le courant d'alimentation du moteur électrique (6) par l'intermédiaire d'un générateur de courant (12) qui lui retransmet par une liaison spécifique (14) l'image du courant alimentant ledit moteur électrique (6).

## Claims

1. A resistance welding apparatus of the type comprising two welding electrodes (21, 31) which are capable of being displaced one with respect to the other and gripping between them the metal sheets to be welded, one at least (31) being for that purpose connected to drive means formed by a worm-and-nut mechanism (8, 9) actuated by an electric motor (6), said drive means being connected to electronic control means (7) for controlling the force with which the electrodes (21, 31) grip said metal sheets to be welded by providing pilot control for the feed current for said electric motor (6), said apparatus further comprising means for feeding current to the electrodes, said worm-and-nut mechanism for transmitting the force of the motor (6) to the electrodes (21, 31) being reversible and of high efficiency, characterised in that said electronic control means (7) control the gripping force of the electrodes by closed-loop control by way of the image of the feed current passing through the electric motor (6).

2. A resistance welding apparatus according to claim 1 characterised in that the helix angle of the thread of the worm (8) is greater than six degrees.

3. A resistance welding apparatus according to claim 2 characterised in that the helix angle of the thread of the worm (8) is between six and ten degrees.

4. A resistance welding apparatus according to any one of claims 1 to 3 characterised in that the microcomputer (7) constituting said electronic control means provides pilot control for the feed current for the electric motor (6) by way of a current generator (12) which retransmits thereto by way of a specific connection (14) the image of the current feeding said electric motor (6).

## Patentansprüche

1. Vorrichtung zur Widerstandsschweißung mit zwei Schweißelektroden (21, 31), die in bezug aufeinander verschiebbar sind und die zu verschweißenden Bleche zwischen sich einklemmen können, wobei wenigstens eine (31) zu diesem Zweck mit Antriebsmitteln verbunden ist, die von einem Schraube/Mutter-Mechanismus (8, 9) gebildet werden, der von einem Elektromotor (6) angetrieben wird, wobei diese Antriebsmittel mit elektronischen Steuermitteln (7) verbunden sind, welche die Kraft, mit der die Elektroden (21, 31) die zu verschweißenden Bleche einklemmen, kontrollieren können, indem sie den Speisestrom des Elektromotors (6) steuern, wobei diese Vorrichtung außerdem Mittel zur Stromversorgung der Elektroden umfaßt, wobei der Schraube/Mutter-Mechanismus, der die Kraft des Motors (6) auf die Elektroden (21, 31) überträgt, reversibel und von hohem Wirkungsgrad ist, dadurch gekennzeichnet, daß die elektronischen Steuermittel (7) die Klemmkraft der Elektroden durch eine Regelung im geschlossenen Regelkreis anhand des Bildes des den Elektromotor (6) durchfließenden Speisestromes kontrollieren.

2. Vorrichtung zur Widerstandsschweißung nach Anspruch 1, dadurch gekennzeichnet, daß der Schraubenlinienwinkel des Gewindes der Schraube (8) größer als sechs Grad ist.

3. Vorrichtung zur Widerstandsschweißung nach Anspruch 2, dadurch gekennzeichnet, daß der Schraubenlinienwinkel des Gewindes der Schraube (8) zwischen sechs und zehn Grad beträgt.

4. Vorrichtung zur Widerstandsschweißung nach einem der Ansprüche 1 bis 3, dadurch gekennzeichnet, daß der die elektronischen Steuermittel bildende Mikrorechner (7) den Speisestrom des Elektromotors (6) mittels eines Stromgenerators (12) steuert, der ihm über eine spezifische Verbindung (14) das Bild des den Elektromotor (6) speisenden Stromes übermittelt.
